# EUROPEAN PATENT APPLICATION

(11) **EP 3 392 799 A1**
(43) Date of publication of application: **24.10.2018**
(21) Application number: 17167554.9
(22) Date of filing: 21.04.2017
(51) Int. Cl.: G06K 9/00

(54) **MEDICAL IMAGE DETECTION**

(71) Applicant: Koninklijke Philips N.V., 5656 AE Eindhoven (NL)
(72) Inventor: Fei, ZUO, 5656 AE Eindhoven (NL); Reinhold, WIMBERGER-FRIEDL, 5656 AE Eindhoven (NL); Anke, PIERIK, 5656 AE Eindhoven (NL); Marinus Bastiaan (Rien), VAN LEEUWEN, 5656 AE Eindhoven (NL); Koen, DE LAAT, 5656 AE Eindhoven (NL)
(74) Representative: de Haan, Poul Erik

(57) **Abstract**

The present invention relates to detecting objects in medical images. In order to provide an improved detection of objects in medical images, a medical image detection device (10) is provided that comprises an image data input (12) and a processing unit (14). The image data input is configured to receive image data of a biological sample. The processing unit comprises a detector (16) and a classifier (18). The detector is configured to detect objects of interest in the sample by a detection in the image data of at least one predetermined object feature. The detected objects being candidate objects, wherein the candidate objects comprise true positives and possible false positives. Further, the classifier is configured to classify the possible false positives as false positives or as true positives. The classifier is a trained classifier, trained specifically to recognize the false positives of the detector.

## Description

### FIELD OF THE INVENTION

The present invention relates to detecting objects in medical images. In particular, the present invention relates to a medical image detection device, to a medical imaging system and to a method for detecting predetermined biological features in digital imaging.

### BACKGROUND OF THE INVENTION

Analyzing medical images, for example of tissue probes, can be used for diagnostic purposes. For example, image analysis is provided for selecting samples for further investigations. Image data may be used to detect objects by computation steps. For example, an estimation of tumor cell numbers and purity is provided. Image analysis may also be provided for detecting lymphocytes. For providing the image data, probes may be pre-treated, and may be provided e.g. as H&E stained slices, respectively H&E stained images. Images can then be used for further analysis steps, such as quality and quantity assessments. However, it has been shown that quantification in image analysis for detecting objects in medical images may result in complex and time-consuming calculation procedures.

### SUMMARY OF THE INVENTION

There may thus be a need to provide an improved detection of objects in medical images.

The object of the present invention is solved by the subject-matter of the independent claims; further embodiments are incorporated in the dependent claims. It should be noted that the following described aspects of the invention apply also for the medical image detection device, for the medical imaging system and for the method for detecting predetermined biological features in digital imaging.

According to the present invention, a medical image detection device is provided. The device comprises an image data input and a processing unit. The image data input is configured to receive image data of a biological sample. The processing unit comprises a detector and a classifier. The detector is an interest point detector configured to detect objects of interest in the sample by a detection in the image data of at least one predetermined object feature. The detected objects being candidate objects, and the candidate objects comprise true positives and possible false positives. Further, the classifier is configured to classify the possible false positives as false positives or as true positives. The classifier is a trained classifier. The classifier is trained specifically to recognize the false positives of the detector.

The objects of interest detected in the first step thus comprise possible true positives and possible false positives. The verification is provided by the second step for differentiating between the two groups to result in the false positives or as true positives.

The candidate objects (as a result of the first step) thus comprise (as a result of the second step) truly detected objects of interest and wrongly or falsely detected objects of interest.

The provided classifier is based on a tight coupling between the detector and the classifier. The term "tight" coupling refers to a direct coupling, for example, by exclusively using the result of the first step to feed the second step.

Herein, the detector is also referred to as first detector. The first detector is an interest point detector configured to detect objects of interest as candidate objects in the sample by a first detection in the image data of at least one predetermined first object feature.

The term "to receive image data of a biological sample" can also be referred to as "to provide image data of a biological sample". The image data is made available for further data processing by the two-stage procedure.

The objects of interest detected in the first step are candidate objects. Hence, the objects of interest detected in the first step can also be referred to as "possible objects of interest" or "candidate objects of interest".

The "true positives" are thus "true positive objects" or "true objects of interest", and the "possible false positives" are thus "possible false positive objects" or "possible false objects of interest".

For example, a learning based classifier or trained classifier is provided for the classifier.

The detection in the image data of at least one predetermined object feature is also referred to as first detection in the image data of at least one predetermined first object feature.

This provides a revealing with reduced effort, in particular computational effort, i.e. data processing effort, since the classification is applied only for the identified locations of the detecting. The specific advantage to use the specific type in the two-stage algorithm where the second stage is a trained model on false positives, is that the first step provides fast selection, whereas the second step provides refinement in a thorough way. The two-step detection thus provides an improved finding of objects in images.

This two-step procedure provides a (first) detecting that provides a (first) amount of detected objects of interest or locations, for example, and a classification (i.e. a second step), that provides a (second) amount of classified objects of interest or locations. As the classification is applied only for the result of the detecting provided by e.g. applying an interest point detecting, the effort for the verification of the detected locations is reduced due to the combination of the first algorithm with the second algorithm.

The image data input unit is arranged to receive the image data from a server or data storage or other suitable data providing unit. The image data input unit is thus provided to make the image data available to the processing unit. The image data may also be provided by an imaging system.

In an example, an identification data output is provided that is configured to provide true candidate locations.

In an example, the medical image detection device is a digital pathology image detection device.

The term "object of interest" relates to an object/entity, which is looked for in a sample or an image thereof. Such an object has a certain location and has at least one predetermined feature such as one particular image pattern. For example, a lymphocyte may be considered as an object having a relatively small compact and rounded shape.

The term "candidate objects" relates to objects identified by an image algorithm as objects of interest. As certain identifications may be wrong, the candidate objects may comprise "true objects" (or, said differently, "true positives") and possible "false objects" (or, said differently, possible "false positives").

Thus, the term "true positives" or "true objects", which is a very well-known term in the field of image processing, relates to candidate objects that are actually identified or classified correctly, when comparing to a ground truth, e.g. an opinion of a pathologist. For more information, please refer to the usual meaning of this term in the field of machine learning classification, for instance in "Encyclopedia of Machine Learning, C. Sammut and G. I. Webb, Springer reference Business Media LLC 2011.

Further, the term "false positives" or "false objects", which is also a very well-known term in the field of image processing, relates to candidate objects that are wrongly detected and that are actually identified or classified in a particular different category, when comparing to a ground truth, e.g. an opinion of a pathologist. For more information, please refer to the usual meaning of this term in the field of machine learning classification, for instance in "Encyclopedia of Machine Learning, C. Sammut and G. I. Webb, Springer reference Business Media LLC 2011.

In an example, the classification is based on learning in cases where a training set of correctly identified objects is available.

In an example, preferably, the classifier is a model based on learning, such as machine learning or deep learning.

The model is correctly trained with a good training database of false positives. Hence, it could also be referred to as a "learning based classifier" or "trained classifier".

The term "possible false positives" relates to candidate objects that may not yet be considered false positives, because their identifications result from an intermediate analysis of an algorithm and may not be considered final. With respect to the invention, the intermediate analysis may be performed by the first detector, while the classifier used subsequently may lead to the final identification.

The classification by the classifier is a verification of the results of the first step by a second selection, i.e. classification, of the first selection. In other words, the first detector identifies a first group of candidate objects, which may comprise true and false selections. The first group is verified by the classifier as second stage which confirms, i.e. selects, the true selections and which de-selects the false selections.

The classifier is configured to verify and confirm which of the candidate objects is a true positive and which is a false positive.

The verification is based on verifying the possible candidate objects by a classification as a second identifying of at least one predetermined second feature. The non-verified candidate objects of the possible candidate objects are de-selected as false candidate locations and, for example, verified candidate locations of the possible candidate locations are selected as true candidate locations.

In other words, in the first step, candidate objects (with possible locations) are detected in the whole image, or at least in a whole part of the image. These may comprise true objects (true locations) and false objects (false locations). In the second step, the candidates are classified, i.e. verified and false locations are identified to achieve only the true objects (or true locations).

In one example, different resolution levels are used for the two-stage processing, i.e. for the detection of candidate objects as first stage (or first step) and the classifying as second stage (or second step). A lower resolution level is provided for the first stage to achieve fast processing. A higher resolution level is provided for the second stage to achieve an improved discrimination of false positives.

This allows faster processing times, which is particularly suitable for digital pathology, because here whole slide images, each composed of tiles, are processed. Further, the option of different resolutions matches with image structure in digital pathology images where images are stored in a pyramid like structure with different resolutions. For example, one resolution level is used at the detecting step of the process and another resolution level at the classifying step.

According to an example, the processing unit is configured to de-select the classified false positives.

In an option, the processing unit is configured to select the classified true positives.

According to an example, the processing unit is configured to perform the first detection on a substantial part of the image, preferably the complete image data; and to perform the classifying exclusively on the candidate objects of interests.

The term "substantial part of the image" relates to, for example, at least a quarter of the image. In an example, a half or two thirds of the image are used for the first detection.

According to the present invention, also a medical imaging system is provided. The system comprises a tissue probe scanner device and a medical image detection device according to the preceding examples. The tissue probe scanner device is configured to scan biological samples and to provide image data of the scans to the image data input.

In an example, the medical imaging system is provided as a digital pathology imaging system. The biological samples are for example dissected tissue probes.

According to the present invention, also a method for detecting predetermined biological features in digital imaging is provided. The method comprises the following steps:
a) receiving image data of a biological sample;
b) detecting objects of interest in the sample by a detection in the image data of at least one predetermined object feature, the detected candidate objects being candidate objects, wherein the candidate objects comprise true positives and possible false positives; and
c) classifying the possible false positives as false positives or as true positives, wherein the classifying is a trained classifying; wherein the classifying is trained specifically to recognize the false positives of the detecting.

The step a) of "receiving image data of a biological sample" can also be referred to as "providing image data of a biological sample".

In an example, it is provided a sub-step of classifying the candidate objects as false positives and/or as true positives.

In an example, the classifying is based on a tight coupling between the detecting and the classifying.

The detecting of step b) is also referred to as first detecting objects of interest.

In an example, the digital imaging relates to digital pathology.

In an example, the biological sample represents a region of interest.

The first detecting may be an interest-point detector and the classifying may be a refinement step for refining the results of the first step.

According to an example, in step c), the classified false positives are de-selected.

In an example, the true positives are selected.

According to an example, in step b), the first detecting is performed on a substantial part of the image, preferably the complete image data. Further, in step c), the classifying is performed exclusively on the candidate objects.

In an example, the classifying is performed exclusively on the detected possible false positives.

According to an example, the complete image is composed of a predefined number of image tiles, and the first detecting in step b) is performed on the image tiles.

According to an example, the classifying applies a training-based approach to verify the candidate objects detected by the first step.

In this effect, the trained algorithm is able to identify (i.e. to detect) false positives generated in the first step.

As a result, only selected candidate objects, for example its locations, are fed to the training-based classifier.

The classifier can be based on a traditional machine learning based approach, employing a set of features that are optimized for discriminating lymphocytes and other structures. These features include: morphological filters, blob detection filters (LoG, Difference of Gaussians (DoG) and Determinant of Hessian matrix), circular Hough transform derived features and low-pass filters. The features can also include the interest-point descriptors as a result from the first detection step.

As an alternative, the classifier can be also based on a (convolutional) deep neural network. In this case, no specific features are designed. Instead, they are learned directly from the training data.

According to an example, in step b), the first detecting is achieved by applying an interest point detecting to detect candidate locations of lymphocytes as the objects of interest.

The interest pointing detecting is sensitive to circular objects.

According to an example, the first detecting is using a SIFT-based detector algorithm and the classifying is using a pixel-based classifier.

The interest-point detector as the first step avoids a window-based scanning. The interest-point detector quickly identifies the candidate locations that contain lymphocytes, for example.

In an example, the second training-based step rejects candidate locations that are not lymphocytes by employing a series of features, since the training-based step needs only to be applied at the selected locations from the first step. More complicated classifiers can be used without having to sacrifice the speed performance. The approach directly outputs the locations of the lymphocytes without any post-processing required.

In other words, the classifying is made on the selection made in the previous step.

As indicated above, the first step of the approach employs an interest-point detector, for example the one used in the SIFT approach. The detector aims at quickly identifying major morphological characteristics of lymphocytes, in this case, dark, small, round objects. The detector does not require a full scanning-window-based search of the region/slide, such as typically done by training-based approaches.

As an example, the identified candidate locations are provided for further steps, such as examination procedures, like biopsy investigations, or targeted imaging procedures to acquire further image data.

According to an example, the first detecting is provided with higher sensitivity and/or with higher speed than the classifying. Further, the classifying is configured with higher specificity than the first detecting such that false positives are rejected, while true positives are kept in the classifying.

In other words, the classifying is configured such that false locations are rejected, while true locations are kept in the classifying.

In an example, the first detecting is provided with high sensitivity and/or with high speed. The classifying is provided with high specificity and false positives are rejected while true positives are kept.

In an example, the first detecting is using a SIFT-based detector algorithm (SIFT: Scale-Invariant Feature Transform). This provides a high number of true positives and a high number of false positives.

In an example, the classification is using a pixel-based classifier.

According to an example, for step a), biological specimen are provided on a glass slide and a plurality of image tiles, e.g. part-images, of the specimen are acquired and the image data is composed of the plurality of image tiles.

In other words, the sample is provided as a whole-slide-image that has been composed of several image tiles because the field of view of the microscope is smaller than the size of the sample.

The biological specimen are provided as tissue probes relating to the field of histology or cytology.

According to an aspect, a two-step approach is provided, in which a first step of a detection provides a first group of detected locations in a medical image. A second step of a classification is then provided as a second step, which classifies the findings of the first detection.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a medical image detection device.
Fig. 2 shows an example of a medical imaging system.
Fig. 3 shows an example of a method for detecting predetermined features in digital imaging.
Fig. 4 shows another illustration of a two-step detector.
Fig. 5 explains some aspects relating to interest point detection.
Fig. 6 shows example feature images used to train a second stage classifier.
Fig. 7A and Fig. 7B show example results of applying a two-stage detection scheme.

### DETAILED DESCRIPTION OF EMBODIMENTS

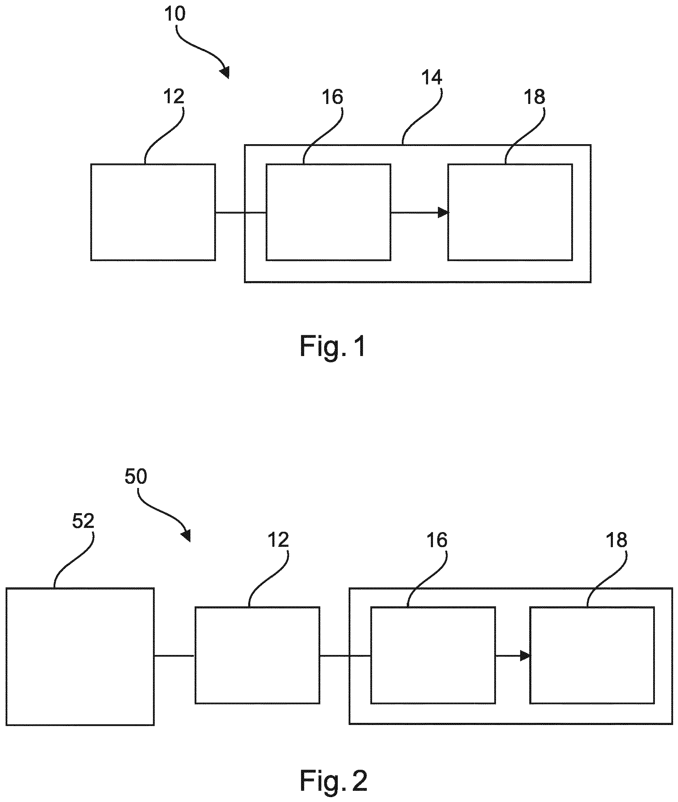

Fig. 1 shows a medical image detection device 10 that comprises an image data input 12, and a processing unit 14. The image data input 12 is configured to receive image data of a biological sample. The processing unit 14 comprises a first detector 16, and a classifier 18. The first detector is an interest point detector configured to detect objects of interest in the sample by a detection in the image data of at least one predetermined object feature. The detected objects being candidate objects, and the candidate objects comprise true positives and possible false positives. The true positives can also be called true objects and the possible false positives can also be called possible false objects. Further, the classifier 18 is configured to classify the possible false positives as false positives or as true positives. The classifier is a trained classifier. The classifier is trained specifically to recognize the false positives of the detector, i.e. the false positives generated by the detector.

Fig. 2 shows a medical imaging system 50. The medical imaging system 50, comprises a tissue probe scanner device 52 and an example of the medical image detection device 10 according to the preceding examples. The tissue probe scanner device is configured to scan biological samples and to provide image data of the scans to the image data input 12.

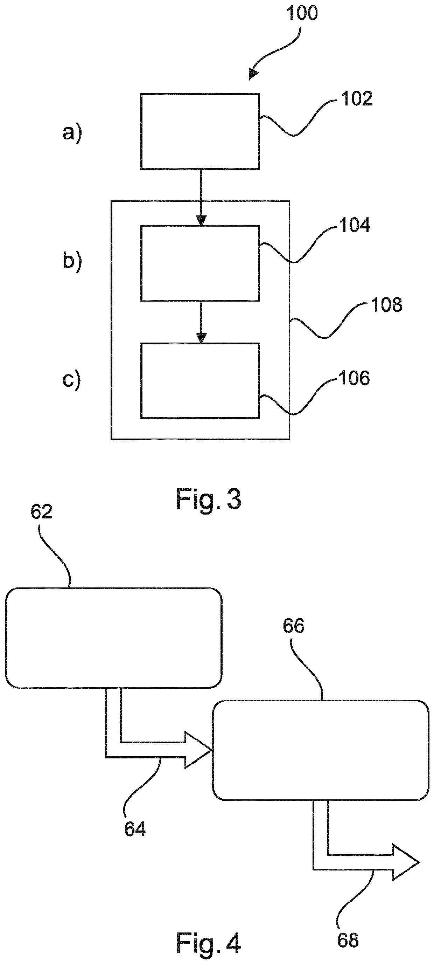

Fig. 3 shows a method 100 for detecting predetermined biological features in digital imaging. The method comprises the following steps:
- In a first step 102, also referred to as step a), image data of a biological sample is received.
- In a second step 204, also referred to as step b), a first detecting of objects of interest in the sample is provided by a detection in the image data of at least one predetermined object feature. The detected objects being candidate objects, wherein the candidate objects comprise true positives and possible false positives.
- In a third step 106, also referred to as step c), by a classifying the possible false positives are classified as false positives or as true positives. The classifying is a trained classifying. The classifying is trained specifically to recognize the false positives.

A dotted-line frame 108 indicates the two-step arrangement.

In an example, as an option but not further shown in detail, in step c), the classified false positives are de-selected 108; and in a further option, the true positives are selected 110.

In an example, also not shown in detail, in step b), the first detecting is performed on a substantial part of the image, preferably the complete image data.

In a further example, also not shown in detail, in step c), the classification is performed exclusively on the detected objects of interests, i.e. the candidate objects.

In a still further example, also not shown in detail, the classification applies a training-based approach to verify true objects of the objects of interest detected by the first step.

In a further example, not shown in detail, in step b), the first detecting is achieved by applying an interest point detecting to detect candidate locations of lymphocytes as the objects of interest.

As an option, it is provided that the first detecting is using a SIFT-based detector algorithm and the classification is using a pixel-based classifier.

In a further example, not shown in detail, the first detecting is provided with higher sensitivity and with higher speed than the classifying. Further, the classifying is configured with higher specificity than the first detecting such that false positives are rejected, while true positives are kept in the classifying.

In a further example, not shown in detail, for step a), biological specimen are provided on a glass slide and a plurality of image tiles of the specimen are acquired and the image data is composed of the plurality of image tiles.

Fig. 4 shows a diagram illustrating the two-step approach. A first frame 62 indicates a first detector with (1) high sensitivity and (2) high speed. For example, this detector is provided using a SIFT based detection. As a result, indicated with a first arrow 64, a high number of true positives, but also a high number of possible false positives is provided. A second frame 66 indicates a classifier with (1) high specificity and (2) rejection of false positives while keeping the true positives. For example, this classifier is provided as pixel-based classifier. As a result, indicated with a second arrow 68, a high number of true positives, and a low number of possible false positives is provided.

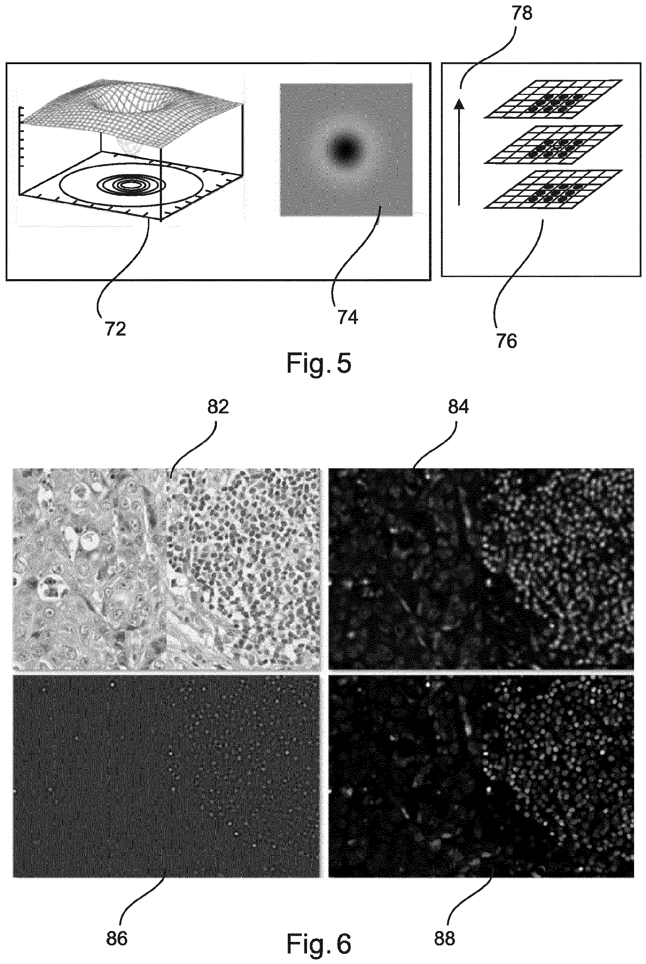

Fig. 5 explains some aspects relating to interest point detection. A three-dimensional diagram 72 illustrates a DoG filter, with a representation 74 of the respective image data. On the right side, a scheme 76 illustrates that SIFT is provided to detect extreme in a DoG scale space. An arrow 78 indicates a direction of scale.

Fig. 6 shows example feature images used to train a second stage classifier. A fist image 82 illustrates an original RGB image of a tissue sample. A second image 84 illustrates an image with an average filter. A third image 86 illustrates an image according to applying a Hessian Determinant. A fourth image 88 illustrates an image according to morphological open criteria.

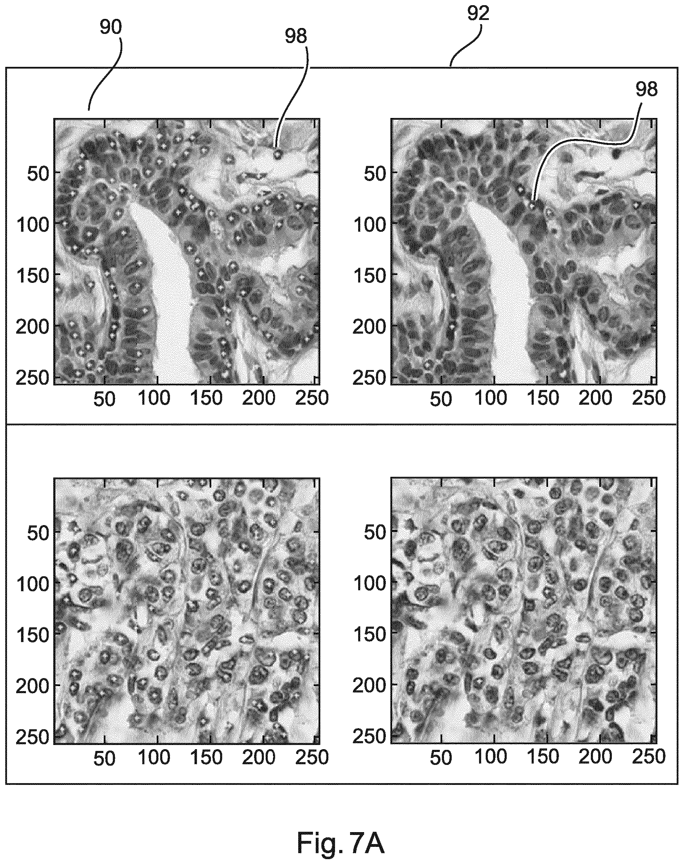

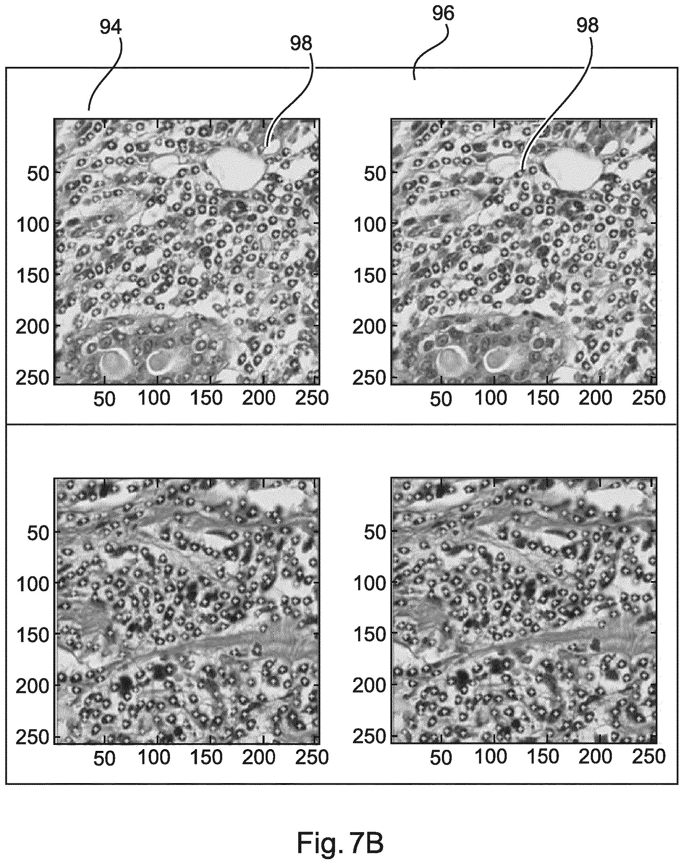

Fig. 7A and Fig. 7B show example results of applying a two-stage detection scheme. Fig. 7A relates to lymphocyte-poor regions. In Fig. 7A, a left column 90 shows images with applying SIFT as a detector only. A right column 92 shows images with SIFT and an applied second-stage classifier. Applying the second-stage classifier significantly removes false positives, improving the specificity. Fig. 7B relates to lymphocyte-rich regions. In Fig. 7B, a left column 94 shows images with applying SIFT as a detector only. A right column 96 shows images with SIFT and an applied second-stage classifier applying the second-stage classifier does not impact the sensitivity significantly. Little dots 98 indicate detected locations, i.e. objects.

As an example, the two-step detector arrangement is provided as an interface to molecular diagnostics, e.g. in order to improve the sample selection method for molecular diagnostics. This facilitates the quantitative estimation of tumor cell numbers and purity, which means support for pathologists. This is based on the idea of using computer algorithms on digitized images.

In an example, after annotation, a region of interest can be removed via dissection and may be analyzed further. The dissection may be provided according to different processes.

As an example, the two-step approach is used for lymphocytes, because lymphocytes constitute a major source of contamination for sample selection. For instance, in colon cancers, lymphocytes usually come with large quantities and their amounts are difficult to estimate due to their smaller size.

As an example, the algorithm provides fast detection of lymphocytes from a whole-slide image. However, also other applications are also provided, such as to characterize immune cell infiltration from H&E images.

In an example, lymphocytes are detected, for example by analyzing lymphocyte infiltration patterns. For example, the quantification of immune cells from H&E images is provided.

In an example, the used first stage involves an interest point detector, and the second stage classifier uses feature sets. For example, for lymphocytes, particular feature sets are provided that are sensitive to circular objects. Interest point descriptors are used as features for the second-stage classifier.

As for H&E stained images, instead of a specific marker that differentiates lymphocytes from other cell types, it is relied on the cell morphology. For example, lymphocytes are treated as a sub-type of all nuclei. This involves a first step of nuclei detection, followed by a second-step nucleus type classification. This provides for highly variable morphology of all nuclei types.

In order to best fit a sample selection workflow, the two-step detector setup is provided to be fast yet sufficiently accurate. An interest-point detector is provided as the first step to avoid the need for window-based scanning. The interest-point detector quickly identifies the candidate locations that contain lymphocytes. As a classifier, a second training-based step can be used to reject candidate locations that are not lymphocytes by employing a series of features, since the training-based step needs only to be applied at the selected locations from the first step. More complicated classifiers can be used without having to sacrifice the speed performance. The approach directly outputs the locations of the lymphocytes without any post-processing required.

In other words, a two-step approach is provided for detecting objects of interest, e.g. lymphocytes, from histopathological images. The approach is not restricted by lymphocytes or even histopathological images. This can be generalized to any approach involving an interest point detector plus a refinement step as second stage.

In an example, the first step of the approach employs an interest-point detector, for example the one used in the SIFT (scale-invariant feature transform) approach. For example, the detector aims at quickly identifying major morphological characteristics of lymphocytes, in this case, dark, small, round objects. The detector also does not require a full scanning-window-based search of the region/slide.

The second step of the approach applies a training-based approach to verify the candidate locations selected by the first step. In this effect, the trained algorithm is able to detect false positives generated in the first step. In other words, only selected locations (candidate objects) are fed to a training-based classifier. The classifier can be based on a traditional machine learning based approach, employing a set of features that are optimized for discriminating lymphocytes and other structures. These features include: morphological filters, blob detection filters (LoG, DoG and Determinant of Hessian matrix), circular Hough transform derived features and low-pass filters. The features can also include the interest-point descriptors as results from the first step.

In another example, the classifier is based on a convolutional deep neural network. In this case, the specific features are learned directly from training data.

In an example, in the first step, an interest-point detector to detect candidate locations of lymphocytes is provided. Hence, a fast interest-point detector is provided as the first step to locate potential lymphocytes. For example, from H&E images, lymphocytes appear as spherical cells with a densely-stained nucleus and a thin rim of cytoplasm. In one example, the interest-point detector uses scale space of Difference of Gaussians, to detect small, round and dark objects. Furthermore, extrema in DoG scale space are searched to find stable objects. This enables a super-fast calculation of these features.

The detector is a sensitive detector and runs very fast. It does not need to scan with small windows exhaustively. However, it can have high false positives, for example other cell types, which also have relatively uniform chromatin distribution in the nucleus.

In an example, also other types of interest-point detector are used besides the detector as described above, or such examples ad those used in speeded up robust features (SURF) and maximally stable extremal regions (MSER).

Besides operating directly in the RGB space of the input image, one can choose to use a color de-convoluted image as input as well, for example a Hematoxylin-channel-only image. It can remove the eosin-rich structures from the image and focus more on hematoxylin concentrated areas.

In an example, in the second step, a training-based approach is used to reject non-lymphocytes by checking a series of image features. The second step aims to achieve high specificity by rejecting non-lymphocytes that have been selected as candidates from the first step. A pixel-based classifier is applied in this stage to ensure a low false positive rate and high true positive rate. An example classifier can be based on the adaptive boosting classifier, or on support vector machines (SVM).

To maximize the specificity of the classifier, a set of features is provided that are most discriminative in separating lymphocytes and non-lymphocyte objects from the same field of view. As an example, negative samples may include epithelial cells (normal and cancerous), stroma cells, blood cells (including red blood cells), endothelial cells, cell debris and slide background. The following features are provided: i) Low-pass filters include the use of average filters, Gaussian smoothing filters. These filters can remove the noise effectively and provide a cleaner input to the subsequent classifier. Filters of different sizes can be used to capture slightly varying sizes of cell nuclei. ii) Blob detection filters include a set of filters that are designed to extract blob-like features, which fit the characteristics of lymphocytes. For example, Laplacian of Gaussians (LoG) or Difference of Gaussians (DoG) filters can be used. Also, Determinant of Hessian matrix is a good feature to extract dark round objects. A series of such filters of varying size are provided to cope with the variability of nuclei size. iii) Morphological filters are provided that remove furious structures and retain the basic shape information; examples are open and close operators/filters. A series of such filters of varying size are applied in an example to cope with the variability of nuclei size. iv) Circular Hough Transform Derived features are provided as a smoothed version of a so-called accumulation array after the circular Hough transform. In addition, a local maximum filter is applied to the accumulation array to capture the center of the circular objects from the image. The filtered output is also used as a feature for training the second-stage classifier. v) SIFT descriptors are provided in one example, which SIFT descriptors result from the SIFT interest point detector from the first stage. The SIFT descriptors are based on histograms of magnitude and orientation values of samples in a neighborhood region around the candidate locations selected by the interest point detector. This captures the gradient/contour information of the object.

In an option, adaptive boosting ("Adaboost") is provided as an example for a machine learning algorithm. This can be used to rank the discriminating capability of all the above features and the most useful features can be selected such that it is not necessary to compute the complete feature set.

In an example, in order to train a classifier to discriminate lymphocytes from the rest objects, both positive and negative samples are provided: For positive samples (true lymphocytes), the center locations of lymphocytes from a set of samples are manually annotated; for negative samples (non-lymphocytes), the first-step detector is first applied, and all the resulting false positives are selected as negative samples to train the second-step classifier.

The examples above are provided for detecting cellular objects in digital pathology images, which thus improves image analytics. An application is the detection of lymphocytes and lymphocyte-rich areas in tumor tissue. An application is the use to further improve the quality and efficiency of the workflow of sample selection for molecular diagnostics. The result can also be integrated into the workflow for optimized dissection.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfil the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section. A computer program may be stored and/or distributed on a suitable medium, such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated, and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A medical image detection device (10), comprising:
- an image data input (12); and
- a processing unit (14);
wherein the image data input is configured to receive image data of a biological sample;
wherein the processing unit comprises a detector (16) and a classifier (18);
wherein:
- the detector is an interest point detector configured to detect objects of interest in the sample by a detection in the image data of at least one predetermined object feature; the detected objects being candidate objects, wherein the candidate objects comprise true positives and possible false positives;
- the classifier is configured to classify the possible false positives as false positives or as true positives, wherein the classifier is a trained classifier; and
wherein the classifier is trained specifically to recognize the false positives of the detector.

2. Device according to claim 1, wherein the processing unit is configured to de-select the classified false positives.

3. Device according to claim 1 or 2, wherein the processing unit is configured to perform the detection on a substantial part of the image, preferably the complete image data; and to perform the classifying exclusively on the candidate objects.

4. A medical imaging system (50), comprising:
- a tissue probe scanner device (52); and
- a medical image detection device (10) according to one of the preceding claims;
wherein the tissue probe scanner device is configured to scan biological samples and to provide image data of the scans to the image data input.

5. A method (100) for detecting predetermined biological features in digital imaging, the method comprising the following steps:
a) receiving (102) image data of a biological sample;
b) detecting (104) objects of interest in the sample by a detection in the image data of at least one predetermined object feature; the detected objects being candidate objects, wherein the candidate objects comprise true positives and possible false positives; and
c) classifying (106) the possible false positives as false positives or as true positives, wherein the classifying is a trained classifying; and wherein the classifying is trained specifically to recognize the false positives.

6. Method according to claim 5, wherein in step c), the classified false positives are de-selected (108).

7. Method according to claim 5 or 6, wherein, in step b), the detecting is performed on a substantial part of the image, preferably the complete image data; and
wherein, in step c), the classifying is performed exclusively on the candidate objects.

8. Method according to one of the claims 5 to 7, wherein the complete image is composed of a predefined number of image tiles, and wherein the detecting in step b) is performed on the image tiles.

9. Method according to one of the claims 5 to 8, wherein the classifying applies a training-based approach to verify the objects of interest detected by the first step.

10. Method according to one of the claims 5 to 9, wherein in step b), the detecting is achieved by applying an interest point detecting to detect candidate locations of lymphocytes as the objects of interest.

11. Method according to one of the claims 5 to 10, wherein the detecting is using a SIFT-based detector algorithm and the classifying is using a pixel-based classifier.

12. Method according to one of the claims 5 to 11, wherein the detecting is provided with higher sensitivity and/or with higher speed than the classifying; and
wherein the classifying is configured with higher specificity than the detecting such that false positives are rejected, while true positives are kept in the classifying.

13. Method according to one of the claims 5 to 12, wherein for step a), biological specimen are provided on a glass slide and a plurality of image tiles of the specimen are acquired and the image data is composed of the plurality of image tiles.

14. A computer program element for controlling an apparatus according to one of the claims 1 to 4, which, when being executed by a processing unit, is adapted to perform the method steps of one of the claims 5 to 13.

15. A computer readable medium having stored the program element of claim 14.
